# FASCICULE DE BREVET EUROPEEN

(11) **EP 3 736 744 B1**
(45) Date de publication et mention de la délivrance du brevet: **20.11.2024**
(21) Numéro de dépôt: 20173401.9
(22) Date de dépôt: 07.05.2020
(51) Int. Cl.: G06N 3/0464, G06N 3/096, G06N 3/098, G06N 3/045

(54) **PROCÉDÉ DE CLASSIFICATION SÉCURISÉE D'UNE DONNÉE D'ENTRÉE AU MOYEN D'UN RÉSEAU DE NEURONES À CONVOLUTION**
GESICHERTES KLASSIFIZIERUNGSVERFAHREN VON EINGANGSDATEN MITTELS EINES NEURONALEN NETZWERKES MIT KONVOLUTION
METHOD FOR SECURE CLASSIFICATION OF INPUT DATA BY MEANS OF A CONVOLUTIONAL NEURAL NETWORK

(30) Priorité: 07.05.2019 FR 1904778
(43) Date de publication de la demande: 11.11.2020
(73) Titulaire: Idemia Identity & Security France, 92400 Courbevoie (FR)
(72) Inventeur: CHABANNE, Hervé, 92400 COURBEVOIE (FR); DESPIEGEL, Vincent, 92400 COURBEVOIE (FR)
(74) Mandataire: Idemia

(56) Documents cités:
- YU HUAPENG ET AL: "Transfer Learning for Face Identification with Deep Face Model", 2016 7TH INTERNATIONAL CONFERENCE ON CLOUD COMPUTING AND BIG DATA (CCBD), IEEE, 16 November 2016 (2016-11-16), pages 13 - 18, XP033122817, DOI: 10.1109/CCBD.2016.014
- VASYL PIHUR ET AL: "Differentially-Private "Draw and Discard" Machine Learning", ARXIV.ORG, CORNELL UNIVERSITY LIBRARY, 201 OLIN LIBRARY CORNELL UNIVERSITY ITHACA, NY 14853, 12 July 2018 (2018-07-12), XP081415355
- TAL BEN-NUN ET AL: "Demystifying Parallel and Distributed Deep Learning", ARXIV:1802.09941V1, 26 February 2018 (2018-02-26), pages 1 - 60, XP055642500, Retrieved from the Internet <URL:https://arxiv.org/pdf/1802.09941v1.pdf> [retrieved on 20191114], DOI: 10.1145/3320060
- NICOLAS PAPERNOT ET AL: "Semi-supervised Knowledge Transfer for Deep Learning from Private Training Data", CORR (ARXIV), vol. 1610.05755v4, 3 March 2017 (2017-03-03), pages 1 - 16, XP055549005

## Description

### DOMAINE TECHNIQUE GENERAL

La présente invention concerne le domaine de la biométrie, et en particulier un procédé de classification sécurisée d'une donnée d'entrée au moyen d'un réseau de neurones à convolution, pour authentification/identification.

### ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

On connait tout particulièrement une utilisation des CNN dans le domaine policier et antiterroriste. Plus précisément, des forces de polices disposent de bases de données de photographies par exemple des visages d'individus impliqués dans des affaires. Il est alors possible d'entraîner des CNN à reconnaitre des visages dans des données de vidéo-surveillance, en particulier pour détecter des individus recherchés. Similairement on peut imaginer que des gouvernements disposent de bases de données biométriques par exemple de empreintes digitales de passeports. Il est alors possible d'entraîner des CNN à reconnaitre les empreintes d'individus en particulier. YU HUAPENG ET AL: "Transfer Learning for Face Identification with Deep Face Model",2016 7TH INTERNATIONAL CONFERENCE ON CLOUD COMPUTING AND BIG DATA (CCBD), IEEE ,DOI: 10.1109/CCBD.2016.014, décrit un apprentissage par transfert de reconnaissance faciale.

Aujourd'hui, une problématique qui se pose est que ces bases de données sont confidentielles, et restreintes (en particulier nationales). Or il serait souhaitable par exemple que les forces de police de plusieurs états coopèrent et améliorent l'efficacité globale de la reconnaissance, sans pour autant que l'on puisse remonter aux données confidentielles.

Cependant cela impliquerait dans tous les cas qu'une entité (par exemple les forces de police d'un état) fassent apprendre leurs CNN sur les bases de données d'une autre entité (les forces de police d'un autre état), i.e. se transmettent en clair les bases de données de photographies ou d'autres traits biométriques, ce qui n'est pas envisageable aujourd'hui.

Il a été proposé dans la demande FR1852351 une solution astucieuse permettant malgré la non-existence d'un espace commun de représentation de faire apprendre des « professeurs » sur chacun des sets de données confidentiels, de sorte à pouvoir entrainer conjointement un « étudiant » qui in fine disposera de la connaissance des divers sets de données confidentielles.

Plus précisément, les professeurs vont générer une base de données d'apprentissage pour l'étudiant en classifiant des données publiques brutes grâce à un système de « vote » des professeurs, le cas échéant bruité pour éviter de pouvoir remonter aux sets individuels de données confidentielles ayant servi à l'apprentissage des professeurs.

Une telle technique apporte entière satisfaction, mais possède l'inconvénient qu'un apprentissage, pour chaque base, se déroule de façon isolée. Il est alors possible de concevoir que bien que les images ayant servies à l'apprentissage soient individuellement protégées, des caractéristiques biométriques nationales puissent quand même fuiter. Un autre problème vient du fait que les professeurs doivent être manipulés à un niveau central pour apprendre l'étudiant et que c'est à ce niveau qu'il peut y avoir des failles de sécurité.

Ainsi, on pourrait encore améliorer la situation.

### PRESENTATION DE L'INVENTION

Selon un premier aspect, la présente invention concerne un procédé d'apprentissage de paramètres d'un réseau de neurones à convolution, CNN, pour classification de données personnelles, afin de reconnaître un individu au moyen d'une donnée personnelle dudit individu, le procédé comprenant la mise en oeuvre d'étapes de :
(a1) Obtention par des moyens de traitement de données d'un serveur principal, des paramètres d'un ensemble d'au moins un premier CNN ;
(a2) Pour un premier CNN dudit ensemble :
   - Apprentissage par les moyens de traitement de données dudit serveur principal ou des moyens de traitement de données d'un serveur secondaire disposant d'une base de données confidentielles d'apprentissage déjà classifiées, à partir d'une base de données publiques d'apprentissage déjà classifiées, des paramètres d'un bloc de représentation final d'un deuxième CNN correspondant au premier CNN auquel on a rajouté ledit bloc de représentation ;
   - Réapprentissage par des moyens de traitement de données dudit serveur secondaire, à partir de sa base de données confidentielles d'apprentissage déjà classifiées, des paramètres du deuxième CNN ;
   - Transmission au serveur principal des paramètres d'un troisième CNN correspondant au deuxième CNN sans bloc de représentation final ;
(a3) Remplacement par les moyens de traitement de données du serveur principal d'un premier CNN dudit ensemble de premiers CNN par le troisième CNN ;
(a4) Agrégation dudit ensemble d'au moins un premier CNN en un quatrième CNN.

Selon d'autres caractéristiques avantageuses et non limitatives :
- lesdites données sont, en particulier des données biométriques, en particulier des images de visages ;
- les étapes (a2) puis (a3) sont mises en oeuvre pour une pluralité de serveurs secondaires disposant chacun d'une base de données confidentielles d'apprentissage déjà classifiées ;
- les étapes (a2) puis (a3) sont répétées un nombre de fois donné de sorte à mettre à jour ledit ensemble de premiers CNN ;
- le réapprentissage à l'étape (a2) des paramètres du deuxième CNN transmis comprend l'introduction de bruit ;
- ledit ensemble obtenu à l'étape (a1) comprend une pluralité de premiers CNN, l'étape (a2) étant mise en œuvre pour un premier CNN sélectionné aléatoirement dans ledit ensemble, et le premier CNN remplacé par le troisième CNN à l'étape (a3) étant sélectionné aléatoirement dans ledit ensemble ;
- les premiers CNN sélectionnés aléatoirement aux étape (a2) et (a3) le sont indépendamment ;
- l'étape (a4) comprend le traitement de données d'une deuxième base de données publiques encore non étiquetées, indépendamment par chacun des premiers CNN, et l'agrégation des résultats de ce traitement ; puis l'apprentissage, à partir de la deuxième base de données publiques d'apprentissage à présent étiquetées avec les résultats agrégés, des paramètres dudit quatrième CNN ;
- les résultats du traitement d'une donnée d'une deuxième base de données publiques par les premiers CNN sont des vecteurs de caractéristiques, l'agrégation des résultats de ce traitement consistant à faire la moyenne des vecteurs de caractéristiques obtenus ;
- ledit bloc de représentation du deuxième CNN établit une correspondance d'un espace de représentation du premier CNN vers un espace de classification ;
- ledit bloc de représentation consiste en une couche entièrement connectée ;
- soit l'apprentissage des paramètres du bloc de représentation final du deuxième CNN est mis en œuvre par les moyens de traitement de données dudit serveur principal, et l'étape (a2) comprend la transmission subséquente audit serveur secondaire des paramètres dudit deuxième CNN, soit l'apprentissage des paramètres du bloc de représentation final du deuxième CNN est mis en œuvre par les moyens de traitement de données dudit serveur secondaire, et l'étape (a2) comprend la transmission préalable audit serveur secondaire des paramètres dudit premier CNN.

Selon un deuxième aspect est proposé un procédé de classification d'une donnée d'entrée, caractérisé en ce qu'il comprend la mise en œuvre d'étapes de :
(a) Apprentissage d'un quatrième CNN conformément au procédé selon le premier aspect ;
(b) Classification par les moyens de traitement de données du terminal de ladite donnée d'entrée, au moyen du quatrième CNN.

Selon un troisième et un quatrième aspect, l'invention concerne un produit programme d'ordinateur comprenant des instructions de code pour l'exécution d'un procédé selon le premier aspect d'apprentissage de paramètres d'un réseau de neurones à convolution, CNN, ou selon le deuxième aspect de classification d'une donnée d'entrée ; et un moyen de stockage lisible par un équipement informatique sur lequel un produit programme d'ordinateur comprend des instructions de code pour l'exécution d'un procédé selon le premier aspect d'apprentissage de paramètres d'un réseau de neurones à convolution, CNN, ou selon le deuxième aspect de classification d'une donnée d'entrée.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La figure 1 est un schéma d'une architecture pour la mise en œuvre des procédés selon l'invention ;
La figure 2 représente schématiquement les étapes du procédé d'apprentissage selon l'invention ;
La figure 3 représente schématiquement comment sont définis l'un par rapport à l'autres les premier, deuxième et troisième CNNs utilisés dans les procédés selon l'invention.

### DESCRIPTION DETAILLEE

### Architecture

Selon deux aspects complémentaires de l'invention, sont proposés :
- un procédé d'apprentissage de paramètres d'un réseau de neurones à convolution (CNN) pour classification de données ; et
- un procédé de classification d'une donnée d'entrée utilisant un CNN appris grâce au premier procédé.

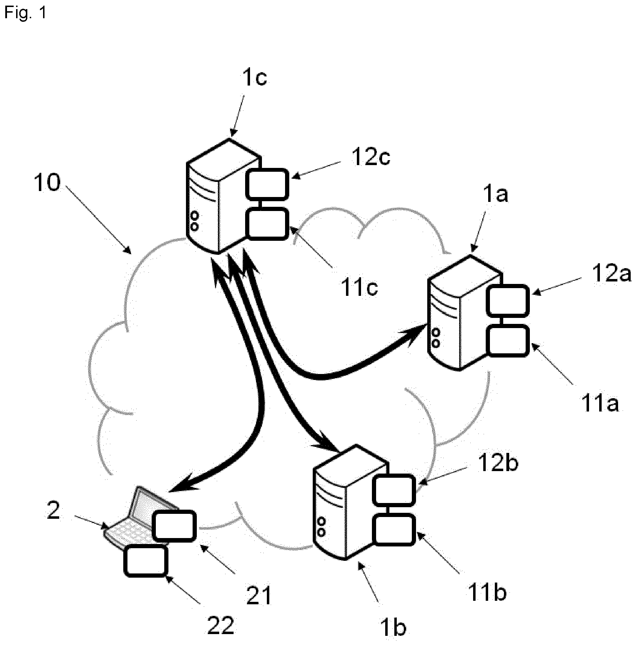

Ces deux types de procédés sont mis en œuvre au sein d'une architecture telle que représentée par la **figure 1**, grâce à un ou plusieurs serveurs 1a, 1b, 1c et un terminal 2. Le ou les serveurs 1a, 1b, 1c sont l'équipement d'apprentissage (mettant en œuvre du premier procédé) et le terminal 2 est un équipement de classification (mettant en œuvre le deuxième procédé), par exemple un équipement de traitement de données de vidéo-surveillance.

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

Un serveur 1c est un serveur dit principal qui ne dispose pas de base de données d'apprentissage (ou du moins pas de base de données confidentielle, mais on verra qu'il a accès à au moins une première base de données publiques d'apprentissage). Le rôle de ce serveur 1c peut tout à fait être accompli par l'un ou l'autre des serveurs 1a, 1b, mais de façon préférée c'est un serveur distinct (i.e. cloisonné) pour éviter tout risque de divulgation des bases de données confidentielles des serveurs 1a, 1b. Similairement, le terminal 2 pourrait être confondu avec le serveur principal 1c. En effet, au moins un serveur 1a, 1b dit secondaire (ou « client ») stocke une base de données confidentielles d'apprentissage, i.e. un ensemble de données déjà classifiées (par opposition aux données dites d'entrée que l'on cherche justement à classifier). De façon préférée, on a au moins deux bases de données confidentielles d'apprentissage déjà classifiées, stockées sur deux serveurs secondaires distincts (1a et 1b dans la figure 1), sans interactions : le serveur 1a n'a pas accès à la base du serveur 1b et vice-versa.

Il s'agit par exemple de bases de données de forces de police nationales de deux états.

A ce titre, lesdites données d'entrée ou d'apprentissage sont préférentiellement des données personnelles, i.e. personnelles d'un individu (pour lesquelles la confidentialité est donc nécessaire), et en particulier soit des données biométriques (qui sont par définition personnelles à leur possesseur), soit des données personnelles alphanumériques (typiquement nom, prénom, date et lieu de naissance, adresse, etc.). A noter qu'on ne sera pas limité à ces deux types de données personnelles, et qu'on pourra par exemple prendre une signature, un sceau, etc.

De manière générale, la classification d'une donnée personnelle est typiquement la reconnaissance de l'individu concerné, et à ce titre le présent procédé de classification d'une donnée personnelle d'entrée pourra être un procédé d'identification/authentification d'un individu au moyen d'une donnée personnelle dudit individu.

A noter que selon un aspect non revendiqué, le présent procédé n'est pas limité aux données personnelles, et, les données d'entrée ou d'apprentissage peuvent être représentatives d'images, de sons, etc. (ladite classification étant une reconnaissance d'objet, d'animal, etc.).

Dans le mode de réalisation préféré de données biométriques, les données d'entrée ou d'apprentissage sont typiquement à nouveau représentatives d'images voire directement des images de traits biométriques (visages, empreintes digitales, iris, etc.), ou directement des données prétraitées issues des traits biométriques (par exemple la position de minuties dans le cas d'empreintes digitales). Dans la suite de la présente description on prendra l'exemple d'images de visages, mais on comprendra qu'on n'est pas limité à ce mode de réalisation.

De façon générale, les données personnelles et en particulier biométriques sont des données « non quantifiables » (dans le sens où un visage ou une empreinte n'a pas de valeur numérique), pour lesquelles il n'existe pas d'espace commun de représentation.

### CNN

Un CNN contient généralement quatre types de couches traitant successivement l'information :
- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire *NL* est typiquement la fonction *ReLU* (Rectified Linear Unit, i.e. Unité de Rectification Linéaire) qui est égale à *f(x)* = *max(0, x)* et la couche de pooling (noté *POOL*) la plus utilisée est la fonction *MaxPool2*×*2* qui correspond à un maximum entre quatre valeurs d'un carré (on met en commun quatre valeurs en une seule).

La couche de convolution, notée *CONV,* et la couche entièrement connectée, notée *FC*, correspondent généralement à un produit scalaire entre les neurones de la couche précédente et les poids du CNN.

Les architectures typiques de CNN empilent quelques paires de couches *CONV* → *NL* puis ajoutent une couche *POOL* et répètent ce schéma *[(CONV* → *NL)^{p}* → *POOL*] jusqu'à obtenir un vecteur de sortie de taille suffisamment petite, puis terminent par deux couches entièrement connectées *FC*.

Voici une architecture CNN typique :

*INPUT* → *[[CONV* → *NL]^{p}* → *POOL]ⁿ* → *FC* → *FC*

Dans le cadre du présent procédé, on pourra notemment utiliser les CNN tels que proposés dans les documents Omkar M. Parkhi, Andrea Vedaldi, Andrew Zisserman: Deep Face Recognition. BMVC 2015*,* et DeepVisage: Making face recognition simple yet with powerful generalization skills. Abul Hasnat, Julien Bohne, Jonathan Milgram, Stephane Gentric, Liming Chen, ICCV 2017*,* ces réseaux étant particulièrement efficaces pour la reconnaissance de visages.

### Principe

On connait des algorithmes dit d'apprentissage fédéré permettant de conserver la confidentialité des données. Par exemple, le document H. Brendan McMahan, Daniel Ramage, Kunal Talwar, Li Zhang Learning Differentially Private Recurrent Language Models. https://arxiv.org/pdf/1710.06963v3.pdf, permet d'apprendre des modèles de type LSTM (Long Short-Term Memory) utilisés dans la reconnaissance du langage, en soumettant successivement un modèle partagé à plusieurs utilisateurs (serveurs secondaires).

Plus précisément, pour un groupe de serveurs secondaires sélectionné, chacun génère une mise à jour d'un modèle reçu sur la base de tout ou partie de sa base de données confidentielles sous la forme d'un vecteur, qui est « clippé » (i.e. le cas échéant moyenné) de sorte à borner sa norme, et bruité.

Plus récemment, un nouvel algorithme d'apprentissage a été proposé dans le document Vasyl Pihur, Aleksandra Korolova, Frederick Liu, Subhash Sankuratripati, Moti Yung, Dachuan Huang, Ruogu Zeng. Differentially-Private "Draw and Discard" Machine Leaming. https://arxiv.org/pdf/1807.04369v2.pdf.

Cet algorithme "Draw and Discard" (en français « Piocher et Défausser ») permet d'apprendre des modèles de type modèle linéaire généralisée (Generalized Linear Model, GLM). Le GLM généralise la régression linéaire en permettant au modèle linéaire d'être relié à la variable réponse via une fonction lien et en autorisant l'amplitude de la variance de chaque mesure d'être une fonction de sa valeur prévue.

L'algorithme propose d'initialiser un ensemble de k modèles, et de manière répétée, de faire mettre à jour sur la base de données confidentielles un modèle choisi au hasard (en bruitant cet apprentissage) puis de remplacer un modèle de l'ensemble choisi au hasard (pas nécessairement le même) par le modèle mis à jour. La sélection du modèle à mettre à jour est le « draw » et le remplacement d'un modèle est le « discard ». Après un certain nombre d'itérations, on peut agréger les modèles.

Ces techniques apportent satisfaction, mais ne sont pas utilisables dans le cas de l'identification/authentification d'individus, à cause de la non-existence d'un espace commun de représentation. Plus précisément, les différentes bases de données confidentielles portent sur des personnes différentes : il n'est pas possible de simplement transférer un modèle d'un serveur secondaire à un autre pour mise à jour puisque les individus d'autres bases de données leur sont mutuellement inconnus.

Le présent procédé d'apprentissage propose une solution astucieuse permettant de résoudre le problème de la non-existence d'un espace commun de représentation.

### Procédé d'apprentissage

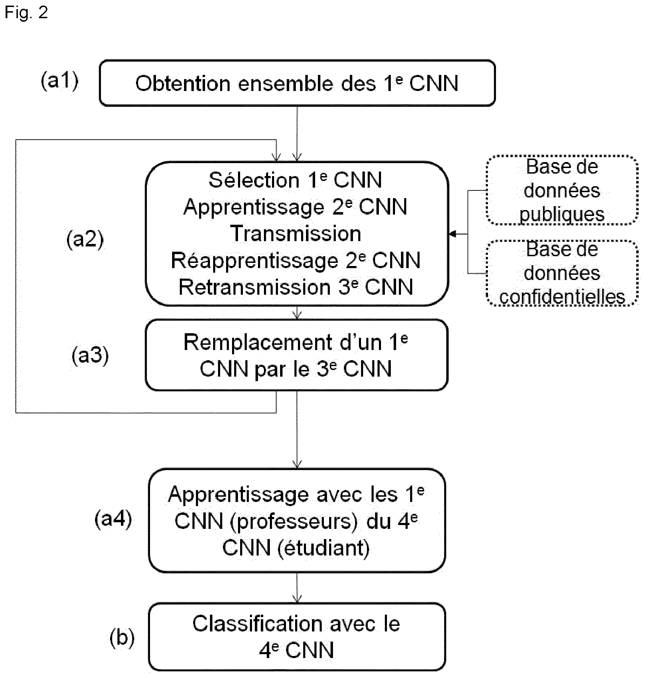

Selon un premier aspect, est proposé en référence à la **figure 2** le procédé d'apprentissage, mis en œuvre par les moyens de traitement de données 11a, 11b, 11c d'au moins un serveur secondaire 1a, 1b et le serveur principal 1c.

Le procédé d'apprentissage commence par une étape « préparatoire » (a1) d'obtention par les moyens de traitement de données 11c d'un serveur principal 1c, des paramètres d'au moins un premier CNN, préférentiellement une pluralité de premiers CNN, formant un ensemble de k premiers CNN, avec k typiquement entre 10 et 30 avantageusement environ 20.

On comprend qu'il s'agit d'une étape d'initialisation mise en œuvre de n'importe quelle façon possible, le ou les premiers CNN pouvant être pris en l'état (avec des valeurs de paramètres prises arbitrairement et/ou choisies aléatoirement) ou préappris par exemple sur une base de données d'apprentissage publique (voir plus loin).

Tous les premiers CNN ont avantageusement la même architecture, et il s'agit préférentiellement de CNN d'extraction de « features » (i.e. caractéristiques, c'est-à-dire des traits différentiant) en particulier biométriques, et non forcément de CNN de classification. Plus précisément, les premiers CNN ne sont pas forcément capables de renvoyer un résultat de classification d'une donnée, mais au moins de produire une représentation des « features » de cette donnée dans un espace de représentation (dit « feature space »). Pour reformuler encore, les premiers CNN ont pour sortie non pas un résultat de classification d'une donnée d'entrée, mais un vecteur de caractéristiques représentant (de manière abstraite) la donnée d'entrée dans ledit espace de représentation.

Dans une étape (a2) on va mettre en œuvre le « draw ». L'étape (a2) est ainsi mise en œuvre pour un premier CNN dudit ensemble sélectionné le cas échéant aléatoirement. Naturellement, si l'ensemble comprend un seul premier CNN, celui-ci est automatiquement sélectionné. On comprendra à ce titre que l'étape (a2) (avec l'étape (a3) qui sera décrite plus loin) peut être répété un grand nombre de fois, en particulier plusieurs centaines voire plusieurs milliers de fois.

Normalement, conformément au mécanisme de draw, les paramètres du premier CNN devraient être transmis à un serveur secondaire 1a, 1b disposant d'une base de données confidentielles d'apprentissage déjà classifiées, pour mise à jour.

Cependant, chaque premier CNN a potentiellement un espace de représentation qui lui est propre, de sorte que cette mise à jour est impossible. Ainsi, on va astucieusement transformer le premier CNN sélectionné en un deuxième CNN, de sorte que quelque soit l'espace de représentation du premier CNN, tous les deuxièmes CNN possèderont un espace de représentation commun.

Pour arriver à cela, à partir d'une base cette fois publique de données d'apprentissage déjà classifiées (qu'on appellera première base de données publiques pour la distinguer d'une éventuelle base de données publiques d'apprentissage cette fois encore non classifiées qui sera utilisée dans un mode de réalisation particulier), le serveur principal 1c ou le serveur secondaire 1a, 1b apprend des paramètres d'un bloc de représentation B final d'un deuxième CNN correspondant au premier CNN sélectionné auquel on a rajouté ledit bloc de représentation B.

Dans le cas de mises en œuvre multiples de l'étape (a2), la sous-étape de transformation de chaque premier CNN sélectionné en un deuxième CNN est mise en oeuvre en utilisant la même première base de données publiques d'apprentissage déjà classifiées de sorte à apprendre les paramètres d'une pluralité de deuxièmes CNN, tous les deuxièmes CNN ayant avantageusement à nouveau la même architecture.

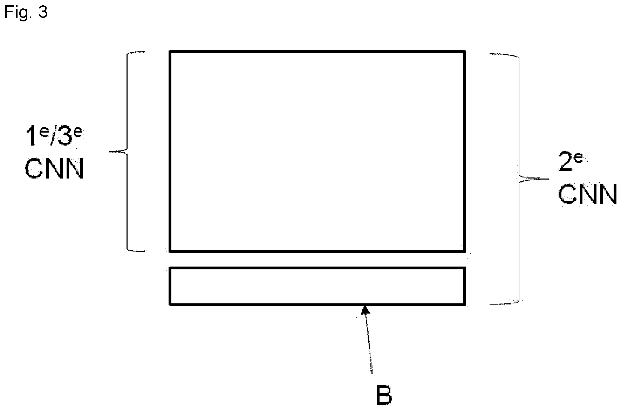

En référence à la **figure 3**, on comprend que les deuxièmes CNN correspondent à des premiers CNN complétés chacun du bloc B final dit de représentation (ou encore couche d'IP, pour « Inner Product »). Plus précisément, on donne aux premiers CNN une capacité de classification commune (dans ladite première base de données publiques) à partir de leur capacité d'extraction de features. On obtient ainsi un espace commun de représentation des classifications. On comprend que le bloc de représentation B peut prendre de nombreuses formes, en particulier au moins une couche entièrement connectée FC, et préférentiellement exactement une couche FC finale. De manière générale, le bloc de représentation B « mappe » (c'est-à-dire établit une correspondance) l'espace de représentation du premier CNN vers l'espace de classification.

Cette sous-étape doit être comprise comme une étape d'apprentissage des seuls paramètres manquants des deuxièmes CNN, i.e. on garde les paramètres déjà appris pour les premiers CNN et on « ré-entraine » ces réseaux de sorte à apprendre le bloc de représentation B, et ce sur les mêmes données, ce qui force l'apparition de l'espace commun. Avantageusement, cet apprentissage n'est pas bruité, car les données sont publiques donc ce n'est pas nécessaire.

L'homme du métier saura utiliser toute base de données publiques déjà classifiées pour la mise en œuvre de cette sous-étape (et le cas échéant lors de l'initialisation des premiers CNN), sachant que par « publiques » on entend que les données ne sont pas confidentielles et peuvent être partagées librement. La première base de données publique est différente de chacune des bases de données confidentielles. On peut soit constituer spécifiquement cette première base publique, soit utiliser une base disponible. Dans le cas où les données sont des photographies de visages, on citera par exemple la base de données IMDB (Internet Movie DataBase), de laquelle il est possible d'extraire des images de N=2622 individus, avec jusqu'à 1000 image par individu, voir Omkar M. Parkhi, Andrea Vedaldi, Andrew Zisserman: Deep Face Recognition. BMVC 2015*.*

A noter que la classification apprise peut, plutôt qu'une simple réponse binaire, graduer les réponses pour obtenir des nuances que l'on pourra exploiter en sachant aussi quelles sont les classes les plus proches, voir le document Geoffrey Hinton, Oriol Vinyals, Jeff Dean: Distilling the Knowledge in a Neural Network. NIPS 2014*.* Cela signifie simplement que là où une classification classique détermine LA classe qu'il estime être celle d'une donnée d'entrée (par exemple le nom de la personne en photo), la présente classification peut indiquer une ou plusieurs classes potentielles, éventuellement avec un pourcentage de confiance.

Si c'est le serveur central 1c qui a mis en œuvre l'apprentissage des paramètres du bloc de représentation B final du deuxième CNN, les paramètres du deuxième CNN obtenu (pour le premier CNN sélectionné, i.e. les paramètres du premier CNN initialement disponibles plus les paramètres du bloc B de représentation nouvellement appris) sont transmis audit serveur secondaire 1a, 1b disposant d'une base de données confidentielles d'apprentissage déjà classifiées. Alternativement, on transmet en amont audit serveur secondaire 1a, 1b les paramètres du premier CNN sélectionné, et ce sont les moyens de traitement de données 11a, 11b de ce dernier qui mettent en œuvre l'apprentissage des paramètres du bloc de représentation B final du deuxième CNN.

A noter que dans le cas d'une pluralité de serveurs secondaires 1a, 1b, on peut soit également sélectionner aléatoirement celui vers lequel la transmission (des paramètres du premier CNN sélectionné ou du deuxième CNN appris) est faite, soit procéder à tour de rôle.

Ensuite, l'étape (a2) comprend le réapprentissage par les moyens de traitement de données 11a, 11b dudit serveur secondaire 1a, 1b, à partir de sa base de données confidentielle d'apprentissage déjà classifiées, des paramètres du deuxième CNN transmis. En d'autres termes, le serveur secondaire 1a, 1b ayant reçu ou appris le deuxième CNN le met à jour sur la base de ses données confidentielles. On note que tout ou partie de sa base est utilisée, en particulier un batch de taille choisie. Tout ou partie des paramètres du deuxième CNN peuvent être verrouillés pendant ce réapprentissage (notamment ceux des toutes premières couches) pour augmenter l'efficacité, mais de manière préférée on réapprend tout le réseau, c'est ce que l'on appelle le fine-tuning.

De manière préférée, le réapprentissage comprend l'introduction de bruit, de sorte à éviter de pouvoir remonter aux bases de données confidentielles des serveurs secondaires 1a, 1b. L'homme du métier pourra se référer aux techniques de bruitage proposées dans le document H. Brendan McMahan, Daniel Ramage, Kunal Talwar, Li Zhang Learning Differentially Private Recurrent Language Models ou le document Vasyl Pihur, Aleksandra Korolova, Frederick Liu, Subhash Sankuratripati, Moti Yung, Dachuan Huang, Ruogu Zeng. Differentially-Private "Draw and Discard" Machine Learning (et de manière générale mettre en œuvre toute autre caractéristique de la technique d'apprentissage décrite dans ce document) ou toute autre technique de « differential privacy » connue.

A l'issue de réapprentissage, sont retransmis au serveur principal 1a, 1b seulement les paramètres d'un troisième CNN correspondant au deuxième CNN sans le bloc de représentation B final. En d'autres termes, on ne renvoie que les paramètres du deuxième CNN correspondant aux couches du début jusqu'au bloc de représentation.

On comprend ainsi que le troisième CNN obtenu a exactement la structure du premier CNN sélectionné et correspond à ce premier CNN mis à jour. Son espace de représentation a évolué et est à présent « un peu plus commun » dans la mesure où de nouvelles données ont été prise en considération.

Il peut donc être replacé au sein dudit ensemble de premiers CNN, conformément au mécanisme « discard ».

Ainsi, dans l'étape (a3), les moyens de traitement de données 11c du serveur principal 1c remplacent dans ledit ensemble de premiers CNN un premier CNN sélectionné le cas échéant aléatoirement par le troisième CNN. Comme expliqué précédemment, ce tirage aléatoire d'un premier CNN est préférentiellement indépendant du tirage aléatoire d'un premier CNN à l'étape (a2). Ainsi, il y a une probabilité 1/k de remplacer le premier CNN déjà sélectionné à l'étape (a2), i.e. de le mettre à jour (on rappelle que le troisième CNN correspond au premier CNN sélectionné mis à jour), mais il y une probabilité (k-1)/k de remplacer un autre premier CNN. Naturellement, si ledit ensemble ne comprend qu'un seul premier CNN, celui-ci est le CNN remplacé.

Le troisième CNN est alors considéré pour la suite du procédé comme un premier CNN à part entière (i.e. l'ensemble de premiers CNN est mis à jour), et les étapes (a2) puis (a3) peuvent être répétées comme expliqué sur le nouvel ensemble de premiers CNN. Il est tout à fait possible que le troisième CNN soit dans d'autres occurrences des étapes (a2) et (a3) sélectionné pour nouvelle mise à jour ou remplacé par un autre troisième CNN. De façon préférée, les serveurs secondaires 1a, 1b mettent en œuvre en parallèle et indépendamment sur leur base de données confidentielle l'étape (a2) : des premiers CNN sont sélectionnés aléatoirement pour chacun de ces serveurs secondaires 1a, 1b, et des troisièmes CNN sont reçus en réponse pour chacun d'entre eux.

Dans une étape (a4) ledit ensemble de premiers CNN est agrégé. On comprend qu'à ce stade ledit ensemble de premiers CNN a été mis à jour un très grand nombre de fois, de sorte que la probabilité qu'il reste un premier CNN d'origine est infime. Tous les CNN présents ont subi multiplement des réapprentissages conformément à l'étape (a2), de sorte qu'on peut supposer que leurs espaces de représentation ont convergé (même si en pratique ils ne seront jamais identiques).

Par agrégation, on entend l'obtention à partir dudit ensemble d'un CNN unique, dit quatrième CNN, pour utilisation en classification.

Un premier mode de réalisation simple de l'étape (a4) peut consister à prendre simplement comme quatrième CNN un premier CNN quelconque dudit ensemble. Si l'ensemble ne contient qu'un seul CNN, celui-ci est pris comme quatrième CNN. Alternativement, s'il y a une pluralité de premiers CNN et si on veut bénéficier de la consolidation de tous ces réseaux, une autre approche va être dans un premier temps d'apprendre les matrices de transformation des espaces de représentation des différents premiers CNN pour faire en sorte que les k premiers CNN travaillent dans le même espace. Cela permettra de disposer d'un vecteur de caractéristiques consolidé en moyennant les sorties des k réseaux.

On peut donc envisager une approche « teacher/student » (professeur/étudiant), afin d'entrainer un quatrième CNN qui, sur une donnée d'entrée, doit reproduire la moyenne des vecteurs de caractéristiques sortis par chacun des k premiers CNN.

Pour cela, on procède avantageusement de façon similaire à ce qui est proposé dans le document Nicolas Papernot, Martín Abadi, Úlfar Erlingsson, lan Goodfellow, Kunal Talwar: Semi-supervised Knowledge Transfer for Deep Learning from Private Training Data. ICLR 2017*,* ou dans la demande FR1852351 qui utilisent cette approche professeur/étudiant.

Plus précisément, les premiers CNN constituent k professeurs qui vont pouvoir entraîner un étudiant.

L'étape (a4) comprend ainsi le traitement de données d'une deuxième base de données publiques encore non étiquetées, au moyen desdits premiers CNN (le résultat étant une classification de la donnée d'entrée ou simplement un vecteur de caractéristiques), puis l'apprentissage, à partir de la deuxième base de données publiques d'apprentissage à présent associées au résultat dudit traitement, c'est-à-dire étiquetées (i.e. classifiées ou associées à un vecteur de caractéristiques), des paramètres du quatrième CNN. Dans un cas de classification, le quatrième CNN comprend à nouveau un bloc de représentation B (en particulier une couche FC) final, et présente ainsi préférentiellement une architecture similaire à celle des deuxièmes CNN.

De façon connue, l'étape (a4) comprend préférentiellement pour chaque donnée de ladite deuxième base de données publique, le traitement de cette donnée indépendamment par chacun des premiers CNN, et l'agrégation des résultats de ce traitement, i.e. le vote des professeurs. Dans le cas où les résultats sont des vecteurs de caractéristiques, le vote des professeurs consiste avantageusement à faire la moyenne des k vecteurs de représentation obtenus.

A nouveau, cette étape peut comprendre l'introduction de bruit sur les résultats de classification avant agrégation, mais ce n'est pas obligatoire dans la mesure où il est déjà impossible de remonter aux données confidentielles des bases des serveurs secondaires 1a, 1b. En effet, la totalité de l'étape (a4) est mise en œuvre au niveau du serveur principal 1c qui dispose de l'ensemble des premiers CNN, et les serveurs secondaires 1a, 1b ne sont plus sollicités.

Finalement, lorsque le quatrième CNN, i.e. l'étudiant, est obtenu, son éventuel bloc de représentation B final peut être supprimé pour revenir à un CNN d'extraction de features.

### Procédé de classification

Selon un deuxième aspect, est proposé le procédé de classification d'une donnée d'entrée, mis en œuvre par les moyens de traitement de données 21 du terminal 2. Le procédé de classification comprend deux étapes : dans une première étape (a) est mis en œuvre l'apprentissage d'un quatrième CNN tel que défini précédemment, et dans une deuxième étape (b) les moyens de traitement de données 21 du terminal 2 classifient ladite donnée d'entrée, au moyen du quatrième CNN.

Ce procédé est mis en œuvre de façon classique, on comprend juste comme expliqué que connaissant seulement le quatrième CNN, il n'y a pas possibilité de remonter aux bases de données confidentielles ayant permis l'apprentissage des premiers CNN.

### Produit programme d'ordinateur

Selon un troisième et un quatrième aspects, l'invention concerne un produit programme d'ordinateur comprenant des instructions de code pour l'exécution (en particulier sur les moyens de traitement de données 11a, 11b, 11c, 21 d'un ou plusieurs serveurs 1a, 1b, 1c ou du terminal 2) d'un procédé selon le premier aspect de l'invention d'apprentissage de paramètres d'un CNN ou un procédé selon le deuxième aspect de l'invention de classification d'une donnée d'entrée, ainsi que des moyens de stockage lisibles par un équipement informatique (une mémoire 12a, 12b, 12c, 22 d'un ou plusieurs serveurs 1a, 1b, 1c ou du terminal 2) sur lequel on trouve ce produit programme d'ordinateur.

## Revendications

1. Procédé d'apprentissage de paramètres d'un réseau de neurones à convolution, CNN, pour classification de données personnelles, afin de reconnaitre un individu au moyen d'une donnée personnelle dudit individu, le procédé comprenant la mise en œuvre d'étapes de :
(a1) Obtention par des moyens de traitement de données (11c) d'un serveur principal (1c), des paramètres d'un ensemble d'au moins un premier CNN ;
(a2) Pour un premier CNN dudit ensemble :
- Apprentissage par les moyens de traitement de données (11c) dudit serveur principal (1c) ou des moyens de traitement de données (11a, 11b) d'un serveur secondaire (1a, 1b) disposant d'une base de données confidentielles d'apprentissage déjà classifiées, à partir d'une base de données publiques d'apprentissage déjà classifiées, des paramètres d'un bloc de représentation (B) final d'un deuxième CNN correspondant au premier CNN auquel on a rajouté ledit bloc de représentation (B) ;
- Réapprentissage par des moyens de traitement de données (11a, 11b) dudit serveur secondaire (1a, 1b), à partir de sa base de données confidentielles d'apprentissage déjà classifiées, des paramètres du deuxième CNN ;
- Transmission au serveur principal (1c) des paramètres d'un troisième CNN correspondant au deuxième CNN sans bloc de représentation (B) final ;
(a3) Remplacement par les moyens de traitement de données (11c) du serveur principal (1c) d'un premier CNN dudit ensemble de premiers CNN par le troisième CNN ;
(a4) Agrégation dudit ensemble d'au moins un premier CNN en un quatrième CNN.

2. Procédé selon la revendication 1, dans lequel lesdites données personnelles sont des données biométriques, en particulier des images de visages.

3. Procédé selon l'une des revendications 1 et 2, dans lequel les étapes (a2) puis (a3) sont mises en œuvre pour une pluralité de serveurs secondaires (1a, 1b) disposant chacun d'une base de données confidentielles d'apprentissage déjà classifiées.

4. Procédé selon l'une des revendications 1 à 3, dans lequel les étapes (a2) puis (a3) sont répétées un nombre de fois donné de sorte à mettre à jour ledit ensemble de premiers CNN.

5. Procédé selon l'une des revendications 1 à 4, dans lequel le réapprentissage à l'étape (a2) des paramètres du deuxième CNN transmis comprend l'introduction de bruit.

6. Procédé selon l'une des revendications 1 à 5, dans lequel ledit ensemble obtenu à l'étape (a1) comprend une pluralité de premiers CNN, l'étape (a2) étant mise en œuvre pour un premier CNN sélectionné aléatoirement dans ledit ensemble, et le premier CNN remplacé par le troisième CNN à l'étape (a3) étant sélectionné aléatoirement dans ledit ensemble.

7. Procédé selon la revendication 6, dans lequel les premiers CNN sélectionnés aléatoirement aux étape (a2) et (a3) le sont indépendamment.

8. Procédé selon l'une des revendications 1 à 7, dans lequel l'étape (a4) comprend le traitement de données d'une deuxième base de données publiques encore non étiquetées, indépendamment par chacun des premiers CNN, et l'agrégation des résultats de ce traitement ; puis l'apprentissage, à partir de la deuxième base de données publiques d'apprentissage à présent étiquetées avec les résultats agrégés, des paramètres dudit quatrième CNN.

9. Procédé selon la revendication 8, dans lequel les résultats du traitement d'une donnée d'une deuxième base de données publiques par les premiers CNN sont des vecteurs de caractéristiques, l'agrégation des résultats de ce traitement consistant à faire la moyenne des vecteurs de caractéristiques obtenus.

10. Procédé selon l'une des revendications 1 à 9, dans lequel ledit bloc de représentation (B) du deuxième CNN établit une correspondance d'un espace de représentation du premier CNN vers un espace de classification.

11. Procédé selon l'une des revendications 1 à 10, dans lequel ledit bloc de représentation (B) consiste en une couche entièrement connectée.

12. Procédé selon l'une des revendications 1 à 11, dans lequel soit l'apprentissage des paramètres du bloc de représentation (B) final du deuxième CNN est mis en œuvre par les moyens de traitement de données (11c) dudit serveur principal (1c), et l'étape (a2) comprend la transmission subséquente audit serveur secondaire (1a, 1b) des paramètres dudit deuxième CNN, soit l'apprentissage des paramètres du bloc de représentation (B) final du deuxième CNN est mis en œuvre par les moyens de traitement de données (11a, 11b) dudit serveur secondaire (1a, 1b), et l'étape (a2) comprend la transmission préalable audit serveur secondaire (1a, 1b) des paramètres dudit premier CNN.

13. Procédé de classification d'une donnée d'entrée, **caractérisé en ce qu'**il comprend la mise en œuvre d'étapes de :
(a) Apprentissage d'un quatrième CNN conformément au procédé selon l'une des revendications 1 à 12 ;
(b) Classification par les moyens de traitement de données (21) du terminal (2) de ladite donnée d'entrée, au moyen du quatrième CNN.

14. Produit programme d'ordinateur comprenant des instructions de code pour l'exécution d'un procédé selon l'une des revendications 1 à 12 d'apprentissage de paramètres d'un réseau de neurones à convolution, CNN, ou de classification d'une donnée d'entrée selon la revendication 13, lorsque ledit programme est exécuté par un ordinateur.

15. Moyen de stockage lisible par un équipement informatique sur lequel un produit programme d'ordinateur comprend des instructions de code pour l'exécution d'un procédé selon l'une des revendications 1 à 12 d'apprentissage de paramètres d'un réseau de neurones à convolution, CNN, ou de classification d'une donnée d'entrée selon la revendication 13, lorsque les instructions de code sont executées par un ordinateur.

## Patentansprüche

1. Verfahren zum Anlernen von Parametern eines neuronalen Netzes mit Konvolution, CNN, zur Klassifizierung personenbezogener Daten, um eine Einzelperson mittels eines personenbezogenen Datenelements der Einzelperson zu erkennen, wobei das Verfahren die Durchführung folgender Schritte umfasst:
(a1) Erhalten, durch Datenverarbeitungsmittel (11c) eines Hauptservers (1c), von Parametern einer Menge von wenigstens einem ersten CNN;
(a2) Für ein erstes CNN der Menge:
- Anlernen, durch die Datenverarbeitungsmittel (11c) des Hauptservers (1c) oder Datenverarbeitungsmittel (11a, 11b) eines Sekundärservers (1a, 1b), der über eine Datenbank bereits klassifizierter vertraulicher Lerndaten verfügt, anhand einer Datenbank bereits klassifizierter öffentlicher Lerndaten, der Parameter eines finalen Repräsentationsblocks (B) eines zweiten CNN, das dem ersten CNN entspricht, dem der Repräsentationsblock (B) hinzugefügt wurde;
- Erneutes Anlernen, durch Datenverarbeitungsmittel (11a, 11b) des Sekundärservers (1a, 1b), anhand von dessen Datenbank bereits klassifizierter vertraulicher Lerndaten, der Parameter des zweiten CNN;
- Übertragen der Parameter eines dritten CNN, das dem zweiten CNN ohne finalen Repräsentationsblock (B) entspricht, an den Hauptserver (1c);
(a3) Ersetzen, durch die Datenverarbeitungsmittel (11c) des Hauptservers (1c), eines ersten CNN der Menge von ersten CNN durch das dritte CNN;
(a4) Aggregation der Menge von wenigstens einem ersten CNN zu einem vierten CNN.

2. Verfahren nach Anspruch 1, wobei die personenbezogenen Daten biometrische Daten sind, insbesondere Bilder von Gesichtern.

3. Verfahren nach einem der Ansprüche 1 und 2, wobei die Schritte (a2) und anschließend (a3) für eine Mehrzahl von Sekundärservern (1a, 1b) durchgeführt werden, die jeweils über eine Datenbank bereits klassifizierter vertraulicher Lerndaten verfügen.

4. Verfahren nach einem der Ansprüche 1 bis 3, wobei die Schritte (a2) und anschließend (a3) eine bestimmte Anzahl von Malen wiederholt werden, um die Menge von ersten CNN zu aktualisieren.

5. Verfahren nach einem der Ansprüche 1 bis 4, wobei das erneute Anlernen in Schritt (a2) der übertragenen Parameter des zweiten CNN das Einbringen von Rauschen umfasst.

6. Verfahren nach einem der Ansprüche 1 bis 5, wobei die Menge, die in Schritt (a1) erhalten wird, eine Mehrzahl von ersten CNN umfasst, wobei der Schritt (a2) für ein erstes CNN durchgeführt wird, das zufällig aus der Menge auswählt wird, und das erste CNN, das in Schritt (a3) durch das dritte CNN ersetzt wird, zufällig aus der Menge auswählt wird.

7. Verfahren nach Anspruch 6, wobei die ersten CNN, die in den Schritten (a2) und (a3) zufällig ausgewählt werden, unabhängig ausgewählt werden.

8. Verfahren nach einem der Ansprüche 1 bis 7, wobei der Schritt (a4) das Verarbeiten von Daten einer zweiten Datenbank öffentlicher, noch ungelabelter Daten, unabhängig durch jedes der ersten CNN, und das Aggregieren der Ergebnisse dieser Verarbeitung umfasst; dann das Anlernen, anhand der zweiten Datenbank öffentlicher Lerndaten, die jetzt mit den aggregierten Ergebnissen gelabelt sind, der Parameter des vierten CNN.

9. Verfahren nach Anspruch 8, wobei die Ergebnisse der Verarbeitung eines Datenelements einer zweiten Datenbank öffentlicher Daten durch die ersten CNN Merkmalsvektoren sind, wobei das Aggregieren der Ergebnisse dieser Verarbeitung darin besteht, den Mittelwert der erhaltenen Merkmalsvektoren zu bilden.

10. Verfahren nach einem der Ansprüche 1 bis 9, wobei der Repräsentationsblock (B) des zweiten CNN eine Entsprechung eines Repräsentationsraums des ersten CNN zu einem Klassifizierungsraum herstellt.

11. Verfahren nach einem der Ansprüche 1 bis 10, wobei der Repräsentationsblock (B) aus einer vollständig verbundenen Schicht besteht.

12. Verfahren nach einem der Ansprüche 1 bis 11, wobei entweder das Anlernen der Parameter des finalen Repräsentationsblocks (B) des zweiten CNN von den Datenverarbeitungsmitteln (11c) des Hauptservers (1c) durchgeführt wird und der Schritt (a2) das nachfolgende Übertragen der Parameter des zweiten CNN an den Sekundärserver (1a, 1b) umfasst oder das Anlernen der Parameter des finalen Repräsentationsblocks (B) des zweiten CNN von den Datenverarbeitungsmitteln (11a, 11b) des Sekundärservers (1a, 1b) durchgeführt wird und der Schritt (a2) das vorhergehende Übertragen der Parameter des ersten CNN an den Sekundärserver (1a, 1b) umfasst.

13. Verfahren zur Klassifizierung eines Eingangsdatenelements, **dadurch gekennzeichnet, dass** es die Durchführung folgender Schritte umfasst:
**(a)** Anlernen eines vierten CNN entsprechend dem Verfahren nach einem der Ansprüche 1 bis 12;
**(b)** Klassifizieren, durch die Datenverarbeitungsmittel (21) des Endgeräts (2), des Eingangsdatenelements mittels des vierten CNN.

14. Computerprogrammprodukt umfassend Code-Anweisungen für die Ausführung eines Verfahrens nach einem der Ansprüche 1 bis 12 zum Anlernen von Parametern eines neuronalen Netzes mit Konvolution, CNN, oder zur Klassifizierung eines Eingangsdatenelements nach Anspruch 13, wenn das Programm von einem Computer ausgeführt wird.

15. Speichermittel, das von einer Computereinrichtung gelesen werden kann, auf dem ein Computerprogrammprodukt Code-Anweisungen für die Ausführung eines Verfahrens nach einem der Ansprüche 1 bis 12 zum Anlernen von Parametern eines neuronalen Netzes mit Konvolution, CNN, oder zur Klassifizierung eines Eingangsdatenelements nach Anspruch 13, wenn das Programm von einem Computer ausgeführt wird, umfasst.

## Claims

1. Method for learning parameters of a convolutional neural network, CNN, for classifying personal data, in order to recognize an individual by way of a personal datum of said individual, the method comprising implementing steps of:
(a1) data processing means (11c) of a main server (1c) obtaining parameters of a set of at least one first CNN;
(a2) for a first CNN of said set:
- the data processing means (11c) of said main server (1c) or data processing means (11a, 11b) of a secondary server (1a, 1b) possessing a database of previously classified confidential learning data learning the parameters of a final representation block (B) of a second CNN corresponding to the first CNN plus said representation block (B), based on a database of previously classified public learning data;
- data processing means (11a, 11b) of said secondary server (1a, 1b) relearning the parameters of the second CNN, based on its database of previously classified confidential learning data;
- transmitting the parameters of a third CNN corresponding to the second CNN without a final representation block (B) to the main server (1c);
(a3) the data processing means (11c) of the main server (1c) replacing a first CNN of said set of first CNNs with the third CNN;
(a4) aggregating said set of at least one first CNN into a fourth CNN.

2. Method according to Claim 1, wherein said personal data are biometric data, in particular images of faces.

3. Method according to either of Claims 1 and 2, wherein steps (a2) and then (a3) are implemented for a plurality of secondary servers (1a, 1b) each possessing a database of previously classified confidential learning data.

4. Method according to one of Claims 1 to 3, wherein steps (a2) and then (a3) are repeated a given number of times so as to update said set of first CNNs.

5. Method according to one of Claims 1 to 4, wherein the relearning of the transmitted parameters of the second CNN in step (a2) comprises introducing noise.

6. Method according to one of Claims 1 to 5, wherein said set obtained in step (a1) comprises a plurality of first CNNs, step (a2) being implemented for a first CNN selected randomly from said set, and the first CNN replaced by the third CNN in step (a3) being selected randomly from said set.

7. Method according to Claim 6, wherein the first CNNs selected randomly in steps (a2) and (a3) are randomly selected independently.

8. Method according to one of Claims 1 to 7, wherein step (a4) comprises each of the first CNNs independently processing data in a second database of public data that have not yet been labelled, and aggregating the results of this processing; and then learning the parameters of said fourth CNN based on the second database of public learning data that have now been labelled with the aggregated results.

9. Method according to Claim 8, wherein the results of the processing of a datum in a second database of public data carried out by the first CNNs are feature vectors, aggregating the results of this processing consisting in averaging the obtained feature vectors.

10. Method according to one of Claims 1 to 9, wherein said representation block (B) of the second CNN establishes a mapping of a representation space of the first CNN to a classification space.

11. Method according to one of Claims 1 to 10, wherein said representation block (B) consists of a fully connected layer.

12. Method according to one of Claims 1 to 11, wherein either the learning of the parameters of the final representation block (B) of the second CNN is implemented by the data processing means (11c) of said main server (1c), and step (a2) comprises subsequently transmitting the parameters of said second CNN to said secondary server (1a, 1b), or the learning of the parameters of the final representation block (B) of the second CNN is implemented by the data processing means (11a, 11b) of said secondary server (1a, 1b), and step (a2) comprises transmitting the parameters of said first CNN to said secondary server (1a, 1b) beforehand.

13. Method for classifying an input datum, **characterized in that** it comprises implementing steps of:
(a) training a fourth CNN in accordance with the method according to one of Claims 1 to 12;
(b) the data processing means (21) of the terminal (2) classifying said input datum by way of the fourth CNN.

14. Computer program product comprising code instructions for executing a method according to one of Claims 1 to 12 for learning parameters of a convolutional neural network, CNN, or for classifying an input datum according to Claim 13 when said program is executed by a computer.

15. Storage medium able to be read by a computer equipment and on which a computer program product comprises code instructions for executing a method according to one of Claims 1 to 12 for learning parameters of a convolutional neural network, CNN, or for classifying an input datum according to Claim 13 when the code instructions are executed by a computer.
